# EUROPEAN PATENT APPLICATION

(11) **EP 0 933 945 A2**
(43) Date of publication of application: **04.08.1999**
(21) Application number: 99101354.1
(22) Date of filing: 26.01.1999
(51) Int. Cl.: H04N 7/26

(54) **Digital signal processing**

(30) Priority: 03.02.1998 GB 9802238
(71) Applicant: NDS LIMITED, West Drayton, Middlesex UB7 ODQ (GB)
(72) Inventor: Davies, Colin, Hale, Fordingbridge SP6 2NS (GB); Brown, Derek William, Alton, Hampshire GU34 2TP (GB)
(74) Representative: Stoakes, Rosemarie Clare

(57) **Abstract**

According to the present invention there is provided a method and processing apparatus for producing a representation of a digital signal in terms of a plurality of basis functions. A first processor determines a basis function for each of a plurality of portions of the signal. A second processor periodically determines a correction coefficient for each basis function. A generator generates a basis function structure book based on the original basis function and the correction coefficient.

This has the advantage of improving the efficiency of the Matching Pursuits process and generating a more accurate basis function structure book.

## Description

This invention relates to improvements in or relating to the processing of digital signals, for example broadcast digital signals.

Broadcasting of digital signals is now a well-established technology. Information in the digital domain can undergo a number of signal processing processes which essentially compress the amount of data that needs to be transmitted. For example in Digital Television it is possible to compress the signal such that less than 1% of the required information needs to be transmitted. This means that many Digital Television channels can be transmitted in the same bandwidth that would previously be used for only one analogue television channel.

There are a number of well-known techniques for compressing digital data; these include the MPEG II standard for digital compression and wavelet compression techniques. A problem that exists with this type of signal processing is to find a numerical representation of signals that is well suited for performing the processes of coding, noise removal, feature enhancement or pattern recognition. It is desirable to decompose the signals into basis elements that are locally adapted to the signal structures and frequency content. The classical methods identified above build signal representations with linear transforms. These transforms build signal representations that are not adapted to the local signal properties.

Matching Pursuits is an alternative method of decomposing a signal into elementary structures that are locally adapted to the local signal properties. Matching Pursuits has excellent performance when compared with other compression techniques. Matching Pursuits performs signal analysis using an arbitrary over-complete dictionary set of basis waveforms. With a complete set of basis waveforms it is possible to completely represent a given signal by a unique linear combination of the waveforms. With an over-complete basis set there may be many different combinations of the basis waveforms which can represent the same given signal. This means that the most appropriate representation can be chosen for different circumstances.

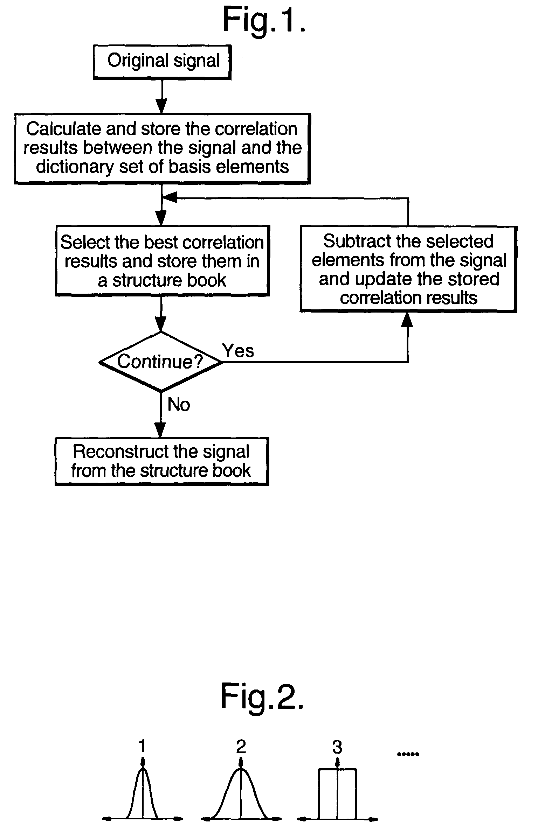

The Matching Pursuits process of decomposing a signal with the elementary structures of a dictionary basis set is shown in the block diagram of Figure 1 and described by the steps below.
1. The algorithm initialises by calculating and storing the correlation results between the signal and the dictionary set of basis waveforms (elementary structures).
2. The data for one or more of the best correlation results is stored in a structure codebook.
3. A decision is made as to whether to continue coding. For compression purposes this may be based on whether a given bit budget has been reached.
4. If the decision is yes then the selected correlation elements of step 2 are subtracted from the original signal and the stored correlation results are updated. The process then loops back to step 2.
5. If the decision is no then the signal can be reconstructed from the stored structure book.

For a typical signal compression system the stored Matching Pursuits structure book will be efficiently coded and stored or transmitted to a decoder.

Figure 2 shows some waveforms (1, 2 and 3) from an example one-dimensional basis dictionary (not shown) for analysis of a time varying signal. In the one-dimensional basis dictionary the waveforms can be located anywhere in time.

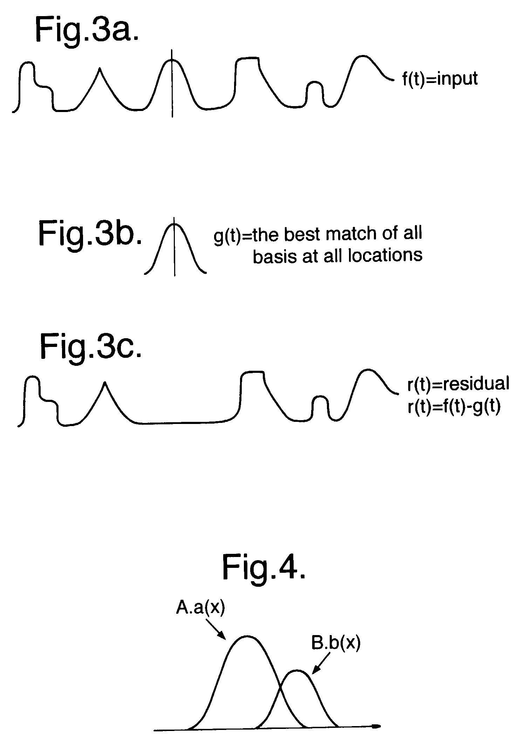

Application of the example dictionary set to an example function f(t) is shown in Figure 3a. After correlating the signal and the dictionary set of basis waveforms the best match correlation g(t) shown in Figure 2 is chosen (Figure 3b). The correlation coefficient, basis waveform (elementary structure identifier) and location in time are stored in the structure codebook. The stored element is subtracted from the original signal to generate the residual r(t) shown in Figure 3c. The process iterates by finding the best correlation result of the residual signal and the dictionary set of basis waveforms.

It is desirable to be able to model and represent multi-dimensional data by sets of multi-dimensional basis functions because a multi-dimensional basis function may provide a better correlation than one-dimensional functions.

For speed of implementation and convenience of design, the multi-dimensional basis functions may be selected to be separable into one dimensional basis functions in orthogonal directions. The representation of the multi-dimensional data can then be treated as a series of one-dimensional problems.

At each iteration elementary structures are selected that minimise the residual signal, the difference between the original signal and the signal represented by the structures in the structure codebook. When the elementary structures chosen to represent the signal overlap, the minimisation of the residual signal becomes a global optimisation problem.

The global optimisation problem is encountered in using a Matching Pursuits technique. The basic waveforms used to represent a signal can be considered as building blocks for the signal. A given part of the signal may require several building blocks to represent it accurately. The chosen size of one building block may influence the size chosen for others and vice versa. Optimising all the sizes of the building blocks together to produce the best representation of the signal is the global optimisation problem. Failure to address this problem can mean that there would be far too much computational effort necessary for real time analysis to be carried out. Accordingly a need exists to seek some means by which the global optimisation problem is avoided or minimised.

This is described in more detail with reference to figure 4. The MP algorithm selects basis element *a(x)* with correlation coefficient *A* and in a later iteration selects the overlapping basis element *b(x)* with correlation coefficient *B*. The correlation coefficients *A* and *B* have been calculated independently in separate iterations of the MP algorithm. It is clear that since the selected basis elements overlap the correlation coefficients *A* and *B* could be best optimised together to minimise the residual signal.

In general terms when the selected basis elements overlap each other global optimisation of the correlation coefficients of the selected basis elements should be used to minimise the residual signal.

Accordingly there is a need for a method and apparatus that overcome at least some of the problems of the prior art and allow processing in real time.

According to one aspect of the present invention there is provided a method of representing a digital signal in terms of a plurality of basis functions comprising: determining a basis function for each of a plurality of portions of the signal; periodically determining a correction coefficient for each basis function; and generating a basis function structure book based on the original basis function and the correction coefficient.

According to a second aspect of the present invention there is provided processing apparatus producing a representation of a digital signal in terms of a plurality of basis functions comprising: a first processor for determining a basis function for each of a plurality of portions of the signal; a second processor for periodically determining a correction coefficient for each basis function; and a generator for generating a basis function structure book based on the original basis function and the correction coefficient.

This has the advantage of improving the efficiency of the Matching Pursuits process and generating a more accurate basis function structure book.

Reference will now be made, by way of example, to the accompanying drawings, in which:
Figure 1 is a prior art block diagram illustrating signal decomposition using Matching Pursuits;
Figure 2 is a diagram showing example elements from a one dimensional basis dictionary for analysis of time varying signals for use in the Matching Pursuits technique in Figure 1;
Figure 3 is a visualisation of the first iteration of Matching Pursuits encoding of an example signal using the basis dictionary set of Figure 2;
Figure 4 is a diagram showing an example of the problem addressed by the present invention;
Figure 5 is a flow diagram showing the one aspect of the method of the present invention; and
Figure 6 is a flow diagram showing a further aspect of the method of the invention.

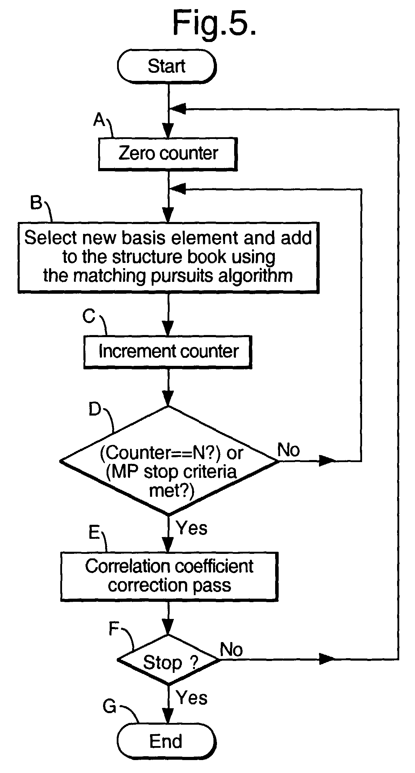

Figure 5 shows a flow diagram of how the Matching Pursuits (MP) algorithm is used on a signal to determine the correlation coefficients of a number of basis elements and how a periodic correction pass is carried out. This correction pass is used to check the successive calculated correlation coefficients in retrospect, in order to determine whether the best match was made for each of the determination.

The first step is to zero a counter (step A). Next a new basis element is selected and added to a structure book (codebook) as is normal for the MP algorithm (step B). After each run of the MP algorithm the counter is incremented by one (step C). Checks are made to see if the MP stop criteria have been met or if the value in the counter is N (step D). N is an integer which gives an indication of the number of elements which have been added to the structure book. If neither criteria are met the process reverts back to step B and the next run of the MP algorithm is made. If either criteria are met then the process moves on to perform a correlation coefficient correction pass (step E). This correction pass is described in greater detail below. The process then determines whether it has reached an MP stop point or not (step F). If the MP stop point has not been reached the process reverts back to step A and the counter is reset to zero. If the MP stop criteria has been met the process ends (step G).

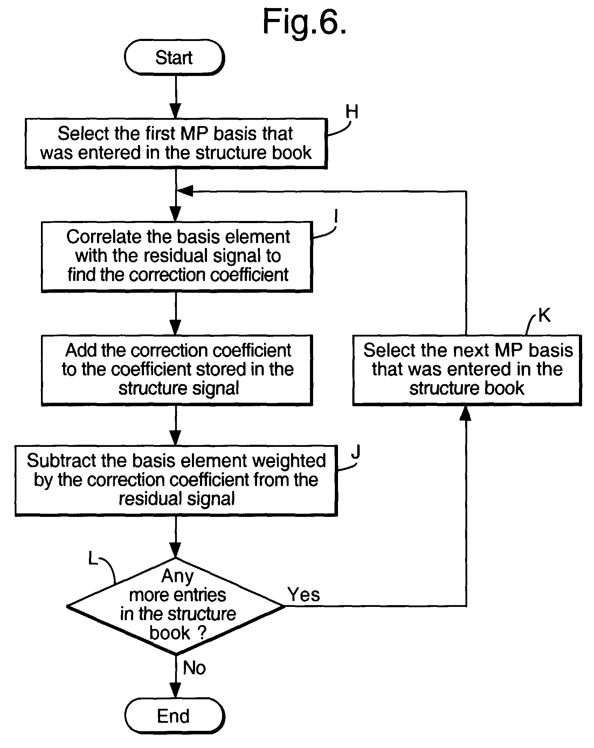

Figure 6 shows the block diagram of the correlation coefficient correction pass. A single pass is made to provide correction to the correlation coefficients of all the MP basis elements so far selected and stored in the structure book. The first MP basis function is selected (step H). The basis function is correlated with the residual signal to find a correction to the correlation coefficient (step I). The basis element as weighted by the correlation coefficient is then subtracted from the residual signal (step J). If there are more structures in the codebook which have not yet passed through the correction route, the steps H to J are repeated (step K). If there are no more structures the correction process is stopped (step L). The pass updates the correction coefficients of the basis elements in the order they were selected and entered into the structure book. The residual signal is updated at each stage before proceeding to the next basis element in the structure book.

The method of periodic correction to the MP correlation coefficients provides a good and computationally efficient approximation to the global minimisation of the residual signal.

It will be appreciated that there are many alternatives to the invention. The number of loops around each of the processes (figure 5 and 6) can be any suitable number. In the present invention of the order of 100 steps for each correction pass has been found to be the optimum. The routine of looking back over the process may be carried out in a different way. Use of the optimal routine proposed herein has been found to be a very close approximation to carrying out a check after every run of the MP algorithm. It will be clear however that much less processing is necessary.

## Claims

1. A method of representing a digital signal in terms of a plurality of basis functions comprising:
determining a basis function for each of a plurality of portions of the signal;
periodically determining a correction coefficient for each basis function; and
generating a basis function structure book based on the original basis function and the correction coefficient.

2. The method of claim 1, wherein the step of determining the basis function comprises correlating each portion of the signal with a plurality of waveforms to determine the best match.

3. The method of claim 1 or claim 2, wherein the step of periodically determining the correction coefficient comprises correlating the original basis function with the residual of the signal to determine where a global optimisation problem has occurred.

4. The method of any of claims 1 to 3, wherein the step of periodically determining the correction coefficient comprises determining one or more correction coefficients for each basis function.

5. The method of any of claims 1 to 4, further comprising providing the digital signal as a digital video signal.

6. The method of any of claims 1 to 5, further comprising using the method to compress the digital signal.

7. Processing apparatus producing a representation of a digital signal in terms of a plurality of basis functions comprising:
a first processor for determining a basis function for each of a plurality of portions of the signal;
a second processor for periodically determining a correction coefficient for each basis function; and
a generator for generating a basis function structure book based on the original basis function and the correction coefficient.

8. The apparatus of claim 7, wherein the first processor comprises a first correlator for correlating each portion of the signal with a plurality of waveforms to determine the best match.

9. The apparatus of claim 7 or claim 8, wherein the second processor comprises a second correlator for correlating the original basis function with the residual of the signal to determine where a global optimisation problem has occurred.

10. The apparatus of any of claims 7 to 9, wherein the second processor determines one or more correction coefficients for each basis function.

11. The apparatus of any of claims 7 to 10, wherein the digital signal is a digital video signal.

12. The apparatus of any of claims 7 to 11, for use in the compression of the digital signal.
